# EUROPEAN PATENT SPECIFICATION

(11) **EP 3 367 821 B1**
(45) Date of publication and mention of the grant of the patent: **27.08.2025**
(21) Application number: 16798316.2
(22) Date of filing: 28.10.2016
(51) Int. Cl.: A23L 27/30, A23P 10/30, A23L 27/00, A23G 4/06, A23G 4/18, B01J 2/20, A23L 29/212, A23L 29/262, A23L 29/269, A23L 29/256

(54) **METHOD FOR PREPARING AN ENCAPSULATE COMPOSITION FOR USE IN AN EDIBLE COMPOSITION**
VERFAHREN ZUR HERSTELLUNG EINER EINKAPSELUNGSZUSAMMENSETZUNG ZUR VERWENDUNG IN EINER ESSBAREN ZUSAMMENSETZUNG
PROCÉDÉ POUR PRÉPARER UNE COMPOSITION ENCAPSULÉE À UTILISER DANS UNE COMPOSITION COMESTIBLE

(30) Priority: 28.10.2015 US 201562247301 P
(43) Date of publication of application: 05.09.2018
(73) Proprietor: Intercontinental Great Brands LLC, East Hanover, NJ 07936 (US)
(72) Inventor: BOGHANI, Navroz, East Hanover, New Jersey 07936 (US); BINDRA, Mandeep, East Hanover, New Jersey 07936 (US); RODRIGUEZ, Luis, East Hanover, New Jersey 07936 (US); HIERRO, Anny, East Hanover, New Jersey 07936 (US)
(74) Representative: Boult Wade Tennant LLP
(86) International application number: PCT/US2016/059330
(87) International publication number: WO 2017/075357

(56) References cited:
- WO-A2-2008/002691
- WO-A2-2015/054576
- US-A1- 2006 034 897
- US-A1- 2006 068 059
- US-A1- 2006 193 896
- US-A1- 2006 263 413
- US-A1- 2006 263 480
- US-A1- 2007 298 061
- US-A1- 2010 312 652

## Description

### FIELD

The disclosure relates generally to a system and method for manufacturing comestible compositions, and more particularly, to a system and method for manufacturing a first component used as an ingredient in a comestible composition.

### BACKGROUND

Conventional methods for preparing one or more active ingredients for use in a comestible include forming an extrudate having the active ingredients encapsulated therein. The extrudate is then convectively cooled to a temperature such that the extrudate may be broken into plurality of pieces before being ground into a powder. Typically, during the formation of the extrudate, an encapsulating ingredient, provided to an extruder as large pellets, is melted before being mixed with one or more active ingredients, supplied as a powder. This melting and mixing requires both energy and heat generation which can be problematic in applications where the active ingredients are heat sensitive.

Accordingly, a system and method capable of continuously and efficiently preparing an active ingredient for use in a comestible is desirable.

### SUMMARY

According to one embodiment of the invention, a method for preparing at least a first component of a comestible composition is according to claim 1.

### BRIEF DESCRIPTION OF THE FIGURES

The accompanying drawings incorporated in and forming a part of the specification embodies several aspects of the present disclosure and, together with the description, serves to explain the principles of the invention. In the drawings:
FIG. 1 is a schematic view of an extruder configured for forming an extrudate using the method of the invention;
FIG.2 is a cross-sectional view of a screw of the extruder of FIG. 1
FIG. 3 is a schematic diagram of a portion of a system for manufacturing a comestible; and
FIG. 4 is a graph comparing a release profile of an extrudate formed according to the method described herein and an extrudate formed using a conventional method.

The detailed description explains embodiments of the invention, together with advantages and features, by way of example with reference to the drawings.

### DETAILED DESCRIPTION

The following disclosure will detail particular embodiments according to the present invention, which provides a method for manufacturing encapsulate compositions, particularly for use in chewing gum and other such confections.

The comestible included in the comestible extrudate, mass and sheet discussed herein include any type of edible product, such as but not limited to chewing gum (at any stage including elastomer, partially finished base, finished chewing gum base, and finished chewing gum), confection (which may be synonymous with chewing gum and candy), sweet and savory biscuits and cakes, nuts, and grains. For ease of description, the comestible will be referred as chewing gum for the remainder of the description. Certain compositions of chewing gum may have a non-uniform texture and/or a multi-layered composition.

As used herein, a product referred to as "chewing gum" or "gum" includes, but is not limited to, compositions ranging from and inclusive of compounded elastomer to finished gum, which may include compounded elastomer in addition to some compounding aids, master batch gum base, compounded elastomer in addition to some subsequent gum ingredients, gum base, gum base in addition to some subsequent gum ingredients, master batch finished gum, and finished gum.

Before explaining the method according to the present invention, it is helpful to discuss the general composition of several typical stages of chewing gum manufacture in which encapsulate may be used, namely finished gum.

A "finished chewing gum" or "finished gum," as used herein, will refer to chewing gum that is generally ready for preparation to distribute the product to the consumer. As such, a finished gum may still require temperature conditioning, forming, shaping, packaging and coating. However, from a compositional standpoint, the chewing gum itself is generally finished. Not all finished gums have the same ingredients or the same amounts of individual ingredients. By varying the ingredients and amounts of ingredients, textures, flavor and sensations, among other things, can be varied to provide differing characteristics to meet the needs of users.

As is generally well known, a finished gum typically includes a water soluble bulk portion, a water insoluble gum base portion, and one or more flavoring agents. The water soluble portion dissipates over a period of time during chewing. The gum base portion is retained in the mouth throughout the chewing process. A finished gum is to be defined as a chewing gum that is ready for user consumption.

A "finished chewing gum base" or "finished gum base", as used herein, will refer to chewing gum that includes a sufficient combination of gum base ingredients that need only be combined with subsequent gum ingredients to form a finished gum. A finished gum base is a visco-elastic material that includes at least a viscous component, an elastic component, and a softener component. For example, a typical gum base may include elastomer, at least some of the filler, resin and/or plasticizer, polyvinyl acetate, and a softener (such as an oil, fat or wax). Merely compounded elastomer without the addition of any softener, for example, would not be a finished gum base because it would not be considered useable in a finished gum structure because of its difficulty, if not impossibility, to chew. In one embodiment, the viscosity of the finished gum base or the extrudate output from the extruder described further below is between about 75 pascal-seconds and about 140,000 pascal-seconds.

A "partial chewing gum base" or "partial gum base," as used herein, will refer to chewing gum that includes a gum base ingredient or combination of gum base ingredients that need be combined with further gum base ingredients and subsequent, non-base gum ingredients to form a finished gum. A partial gum base includes at least an elastic component, and will require addition of at least a viscous and/or softener component to form a finished gum base.

Chewing gum may include a vast number of ingredients in various categories. The systems and methods discussed below may be used to mix any and all known ingredients including, but not limited to, ingredients in the following ingredient categories: elastomers, bulking agents, elastomer plasticizers (which includes resins), elastomer solvents, plasticizers, fats, waxes, fillers, antioxidants, sweeteners (e.g. bulk sweeteners and high intensity sweeteners), syrups/fluids, flavors, sensates, potentiators, acids, emulsifiers, colors, and functional ingredients.

The insoluble gum base in its finished gum base form generally includes ingredients falling under the following categories: elastomers, elastomer plasticizers (resins or solvents), plasticizers, fats, oils, waxes, softeners and fillers. Further discussion of representative ingredients within each category will be provided later on. The gum base may constitute between 5-95% by weight of a finished gum, more typically 10-50% by weight of the finished gum, and most commonly 20-30% by weight of the finished gum.

The water soluble portion of finished gum will be referred to as subsequent ingredients in this disclosure (as they are added subsequent to manufacture of a) finished gum base, and may include subsequent gum ingredients falling under the following categories: softeners, bulk sweeteners, high intensity sweeteners, flavoring agents, acids, additional fillers, functional ingredients and combinations thereof. Softeners are added to the gum in order to optimize the chewability and mouth feel of the gum. The softeners, which are also known as plasticizers, plasticizing agents or emulsifiers, generally constitute between about 0.5-15% by weight of the finished gum. Bulk sweeteners constitute between 5-95% by weight of the finished gum, more typically 20-80% by weight of the finished gum and most commonly 30-60% by weight of the finished gum. High intensity sweeteners may also be present and are commonly used with sugarless sweeteners. When used, high intensity sweeteners typically constitute between 0.001-5% by weight of the finished gum, preferably between 0.01-3% by weight of the finished gum. Typically, high intensity sweeteners are at least 20 times sweeter than sucrose.

Flavor should generally be present in the gum in an amount within the range of about 0.1-15% by weight of the finished gum, preferably between about 0.2-5% by weight of the finished gum, most preferably between about 0.5-3% by weight of the finished gum. Natural and artificial flavoring agents may be used and combined in any sensorially acceptable fashion. When included, acids typically constitute between about 0.001-5% by weight of the finished gum. Optional ingredients such as colors, functional ingredients and additional flavoring agents may also be included in gum.

Referring now to the FIGS., during the formation of a gum or other comestible, a first component may be mixed with one or more other ingredients, such as in a gum manufacturing system for example, to form a finished gum product. In the present invention, the first component includes a composition containing both an "active ingredient" and an "encapsulating ingredient," the active ingredient being surrounded or encapsulated by the encapsulating ingredient. In some embodiments, the active ingredient may be relatively sensitive to high energy mixing environments (such as heat and shearing forces that can be associated with some types of mixing). Any active ingredients typically used in a comestible, such as but not limited to high intensity sweeteners (including natural sweeteners and synthetic sweeteners), food acids, and miscellaneous ingredients (including texture modifiers, coloring agents, salts, oral care ingredients, and other ingredients), are within the scope of the present disclosure. Any encapsulating ingredients typically used in comestible, including polymer or resin, are used in the formation of the first component. The encapsulating ingredients may, but need not be insoluble in water.

In the present invention, the active ingredients include sweeteners and food acids. Sweeteners used may be selected from a wide range of materials including water-soluble sweeteners, water-soluble artificial sweeteners, water-soluble sweeteners derived from naturally occurring water-soluble sweeteners, dipeptide based sweeteners, and protein based sweeteners, including mixtures thereof. Without being limited to particular sweeteners, representative categories and examples include: (a) water-soluble sweetening agents such as dihydrochalcones, monellin, steviosides, glycyrrhizin, saccharin salts, i.e., sodium or calcium saccharin salts, cyclamate salts, acesulfame salts, such as the sodium, ammonium or calcium salt of 3,4-dihydro-6-methyl-1,2,3-oxathiazine-4-one-2,2-dioxide, the potassium salt of 3,4-dihydro-6-methyl-1,2,3-oxathiazine-4-one-2,2-dioxide (Acesulfame-K), the free acid form of saccharin and monatin; (b) dipeptide based sweeteners, such as L-aspartic acid derived sweeteners, such as L-aspartyl-L-phenylalanine methyl ester (Aspartame) and L-alphaaspartyl-N-(2,2,4,4-tetramethyl-3-thietanyl)-D-alaninamide hydrate (Alitame), methyl esters of L-aspartyl-L-phenylglycerine and L-aspartyl-L-2,5-dihydrophenyl-glycine, L-aspartyl-2,5-dihydro-L-phenylalanine; L-aspartyl-L-(1-cyclohexen)-alanine, neotame and advantame; (c) water-soluble sweeteners derived from naturally occurring water-soluble sweeteners, such as Reb-A, chlorinated derivatives of ordinary sugar (sucrose), e.g., chlorodeoxysugar derivatives such as derivatives of chlorodeoxysucrose or chlorodeoxygalactosucrose, known, for example, under the product designation of Sucralose; examples of chlorodeoxy.sucrose and chlorodeoxygalactosucrose derivatives include but are not limited to: 1-chloro-1'-deoxysucrose; 4-chloro-4-deoxy-alpha-D-galactopyranosyl-alpha-D-fructofuranoside, or 4-chloro-4-deoxygalactosucrose; 4-chloro-4-deoxy-alpha-D-galactopyranosyl-1-chloro-1-deoxy-beta-D-fructo-furanoside, or 4,1'-dichloro-4,1'-dideoxygalactosucrose; 1',6'-dichloro 1',6'-dideoxysucrose; 4-chloro-4-deoxy-alpha-D-galactopyranosyl-1,6-dichloro-1,6-dideoxy-beta-D- fructofuranoside, or 4,1',6'-trichloro-4,1',6'-trideoxygalactosucrose; 4,6-dichloro-4,6-dideoxy-alpha-D-galactopyranosyl-6-chloro-6-deoxy-beta-D-fructofuranoside, or 4,6,6'-trichloro-4,6,6'-trideoxygalactosucrose; 6,1',6'-trichloro-6,1',6'-trideoxysucrose; 4,6-dichloro-4,6-dideoxy-alpha-D-galacto-pyranosyl-1,6-dichloro-1,6-dideox y-beta-D-fructofuranoside, or 4,6,1',6'-tetrachloro 4,6,1',6'-tetradeoxygalacto-sucrose; and 4,6,1',6'-tetradeoxy-sucrose, and mixtures thereof; or (d) Other protein based sweeteners such as thaumaoccous danielli (Thaumatin I and II) and talin. Food acids may include citric acid, malic acid, fumaric acid, tartaric acid, lactic acid and adipic acid.

Encapsulation of an active ingredient will result in the protection of the active ingredient from dissolution as a result of contact with water or saliva, thereby extending the relative life of the active ingredient within a finished gum product. In addition, encapsulation of an active ingredient may also result in the protection of the active ingredient during the remainder of the production process. As components of the comestible to be encapsulated may be sensitive to temperature, mixing, extruding, or other factors, the encapsulation allows for efficient handling and protection of these sensitive components during production. Protection of the active ingredient as referenced above is achieved via a mixing of the active ingredient(s) with an encapsulating ingredient(s). Indeed, a composition of at least one encapsulated active ingredient as defined herein includes an active ingredient(s), such as that discussed above, mixed for production or extrusion with an encapsulating ingredient(s) such as that discussed immediately below.

The encapsulating materials/ingredients include polymers or resins, wherein the characteristics of the polymer or resin ingredient control the release profile and the protection of the active ingredient to be encapsulated. In some embodiments, the encapsulating material may be polyvinyl acetate, polyethylene, crosslinked polyvinyl pyrrolidone, polymethylmethacrylate, polylactidacid, polyhydroxyalkanoates, ethylcellulose, polyvinyl acetatephthalate, polyethylene glycol esters, methacrylicacid-co-methylmethacrylate, polyvinylacetate-viynyl alcohol copolymer or any other ingredient suitable for polymer matrix type encapsulation.

As discussed above, it may be desirable to encapsulate certain ingredients or components used in pharmaceuticals or comestibles, such as chewing gum for example. Such compositions described herein include at least one active ingredient or component to be protected and released in a certain release profile, and at least one additional encapsulating ingredient comprising a polymer or resin.

Typically, encapsulation of an active ingredient (e.g., the flavor, sweetener, etc.), will result in a delay in the release of the predominant amount of the active ingredient during consumption of a comestible, such as a gum structure, that includes the encapsulated active ingredient. The initial release of the active ingredient from the encapsulating material of the first component, such as when the first component is used as an ingredient in a gum, permits a portion of the active ingredient to be digested. This initial release generally occurs in response to a release trigger, such as by rupturing the encapsulated active ingredient particles due to chewing, or dissolving the encapsulated ingredients via saliva or solvents in the alimentary canal. However, in pharmaceutical applications, a chemical catalyst, such as stomach acid for example, may be configured to break down the encapsulating material and expose the active ingredient contained therein.

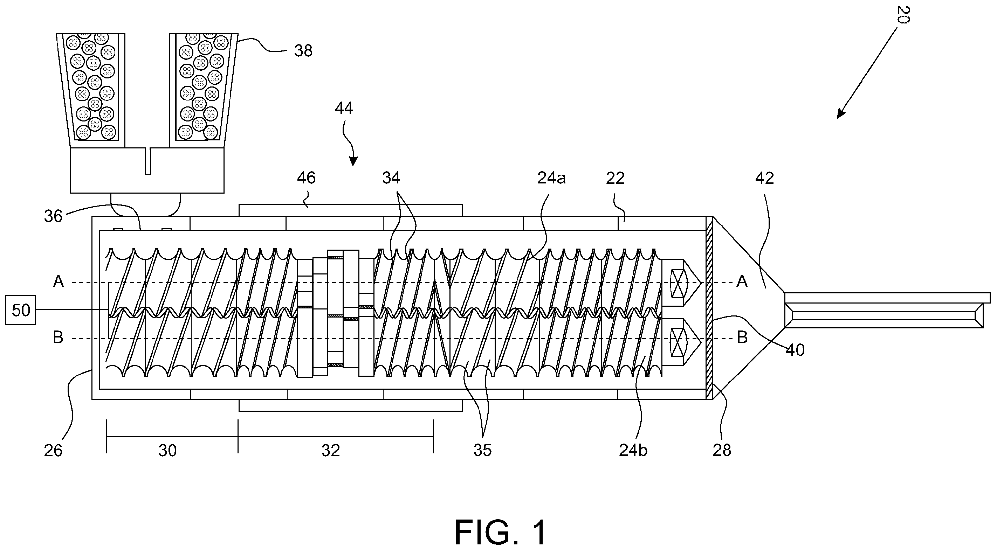

In one embodiment, the first component is formed by supplying the encapsulating ingredient and the active ingredient to an extruder. However, other devices suitable for forming an encapsulating composition, such as a batch mixer for example, are also within the scope of the disclosure. With reference now to FIG. 1, an example of an extruder 20 is illustrated. The extruder 20 is a twin screw extruder including a substantially hollow barrel 22 within which a first screw 24a and second screw 24b are mounted. However, other types of extruders, such as planetary roller extruders and single screw extruders for example, can be used in the method of the invention.

As shown, each of the first and second screws 24a, 24b generally extends from an inlet or feed end 26 to an outlet or extrusion end 28 of the barrel 22 and includes a central longitudinal axis A, B, respectively.

Referring now to the screws 24a, 24b in more detail, in one embodiment, a diameter of each screw 24a, 24b may remain constant over the length thereof. However, as different portions of the extruder 20 may be configured to perform different functions, e.g. mixing and melting, each screw 24a, 24b may have different configuration at different positions over the length of the extruder 20. For example, a first portion 30 of the screws 24a, 24b arranged near the feed end 26 of the extruder 20 may have a first configuration and a downstream, central portion 32 of the screws 24a, 24b may have a second, configuration. The first portion 30 may be configured to mix the ingredients within a corresponding portion of the barrel 22 and the central portion 32 may be configured primary to melt the ingredients within a central portion of the extruder barrel 22. The screws 24a, 24b include corresponding or intermeshing grooves or flights 34. These flights 34 assist in efficiently moving and mixing the first ingredient flowing through the extruder 20, with space 35 remaining for the first ingredient to flow between the flights 34 of the screws 24a, 24b. The flights 34 may have any desirable configuration, including but not limited to, a variance in the distance or gaps between adjacent flights, flight shape, and flight length for example.

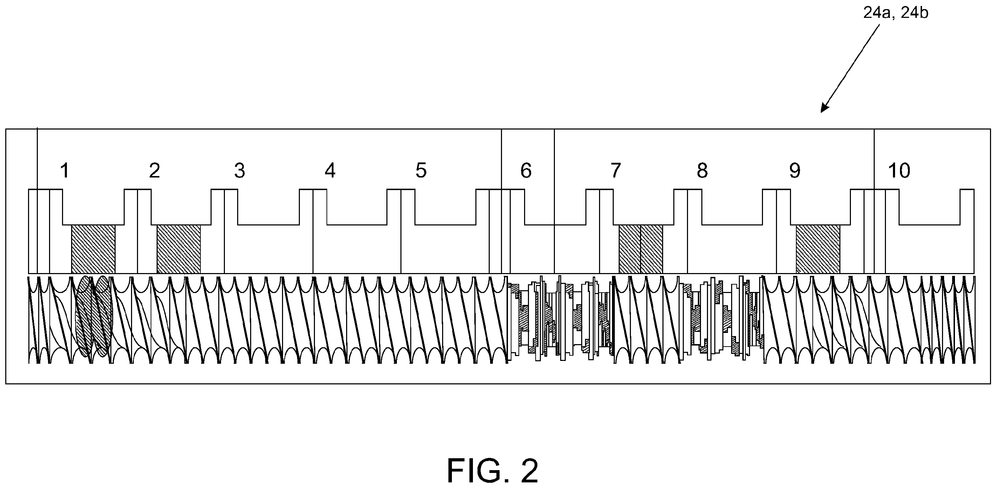

Each screw 24a, 24b includes a shaft having a plurality of elements mounted thereto in a specific configuration to achieve a desired operation of the extruder. The elements may be selected from feeding elements, distributive elements, pumping elements, and dispersive elements. In one embodiment, at least one of the screws 24a, 24b within the extruder 20 includes one or more dispersive elements configured to provide a more aggressive level of mixing than screws 24a, 24b commonly used in the production of a comestible. An example of such a screw is illustrated in FIG. 2. Inclusion of at least one screw having a configuration as described herein more efficiently mixes the ingredients within the extruder 20 resulting in a more homogenous mixture thereof.

Referring again to FIG. 1, the extruder 20 includes at least one point of entry 36 for ingredients entering the extruder 20, such as a point of entry located adjacent the feed end 26 or a point of entry located downstream from the feed end 26 of the barrel 22. The position of each of these points of entry 36 is selectable depending on the chosen application, the ingredient being added, and the form of the ingredient being added. Various types of feed inlets 38 may be used at the points of entry 36 to supply an ingredient to the inner volume of the extruder 20. In one embodiment, the feed inlet 38 is a gravity driven hopper/feeder. Alternatively, the feed inlet 38 may be a side feed inlet configured to provide a supply of an ingredient laterally to a side of the extruder 20.

An extrusion point 40 arranged at the outlet of extrusion end 28 of the barrel 22, includes an opening through which the composition flowing through the extruder 20 will ultimately be extruded. It is notable that a downstream end of the screws 24a, 24b are generally located in proximity to the extrusion point 40 of the extruder 20. Indeed, the downstream end of the screws 24a, 24b may terminate such that the ends thereof are flush with the extrusion point 40. As is known in the art, the extrusion point 40 is fluidly coupled to an extruder die 42 mounted at the extrusion end 28 of the barrel 22. The extruder die 42 is configured to extrude the first component in one or more desirable shapes, such as a rope or a continuous rectangular sheet for example. In an embodiment, a melt pump or gear pump may be positioned between the extrusion end 28 of the barrel 22 and a downstream extrusion die 42. In such instances, the melt pump receives an unformed mass of encapsulate composition from the extruder 20 via extrusion point 40 and provides the encapsulate composition to the extruder die 42 where it is extruded into a desired shape.

In addition, the extruder 20 may include efficient temperature control for the first ingredient mixed therein and extruded therefrom. In one embodiment, the extruder 20 includes a temperature control system 44, such as but not limited to a cooling jacket and/or a heating jacket 46 positioned circumferentially about a portion of the barrel 22. The extruder 20 illustrated and described herein is intended as an example, and other known extruders 20, such as planetary roller extruders for example, can be used in the method of the invention.

At least one motor 50 is operably coupled to the screws 24 of the extruder 20 and is configured to rotate the screws 24 about their respective longitudinal axes A, B. The screws 24 may be configured to co-rotate, or alternatively, may be configured to counter-rotate. Upon entry of the ingredients into the extruder 20, the rotation of the screws 24a, 24b, creates a directional flow of the ingredients towards the extrusion end 28 of the extruder 20. As the ingredients move away from the feed end 26 of the extruder 20, the rotating screws 24a, 24b mix the ingredients in the flow via movement of the flow through the spaces 35 defined between the flights 34 of the rotating screws 24a, 24b. As the ingredients are conveyed and mixed, the ingredients form a first component. An extrudate 12 of the first component is expelled from the extruder 20 in a desired shape complementary to the extruder die 42.

The properties of the encapsulate composition are largely determined by the specific mechanical energy (SME) input to the materials during operation of the extruder 20. Interactions between the active and encapsulating ingredients, feeding position, screw design, and other operating variables are captured within the SME parameter and can therefore be used to manage the extrusion process and the properties of the encapsulate composition formed in the extruder 20. In one embodiment, the SME is increased by operating the extruder 20 at a reduced barrel temperature compared to conventional operational temperatures, such as about 20 °C for example. However, it should be understood that the SME may be increased by altering other operational parameters of the extruder 20. To improve the dispersion of the active ingredient within the encapsulating ingredient, and therefore slow the release of encapsulated active ingredient over time when exposed to a dissolving agent, the specific mechanical energy input to the material is increased compared to a conventional extrusion process.

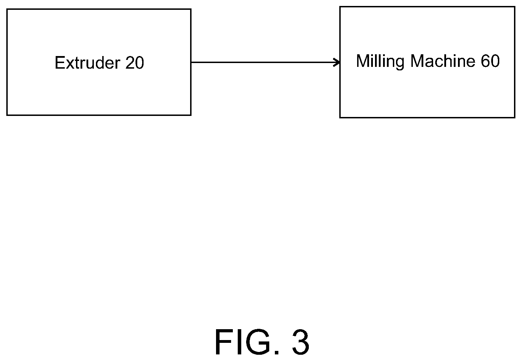

With reference to FIG. 3, the extrudate output from the extruder 20 or other device may be further processed before being added as an ingredient in a comestible. In one embodiment, after being cooled, the extrudate is provided to a milling machine 60 or other similar device configured to grind the extrudate into a powder comprising particles of a desired size. The residence time of the extrudate within the milling machine 60 may be any suitable period of time necessary to achieve the desired particle size. From the milling machine 60, the ground first component may then be provided to a mixing machine (not shown) of a comestible manufacturing system, where the first component is used as an ingredient of a comestible composition as is known in the art.

During the encapsulation process, one or more active ingredients are provided to the extruder 20 from an active ingredient source and one or more encapsulating ingredients are added to the extruder 20 from an encapsulating ingredient source. Alternatively, the active and encapsulating ingredients may enter the extruder 20 from a common source at an active ingredient feed inlet 38 and an encapsulating ingredient feed inlet 38, respectively. In one embodiment, the active and encapsulating ingredients may be mixed before being supplied to the extruder 20 via a single inlet 38. The active ingredients and the encapsulating ingredients may be disposed at the same entry point 36 or at different entry points 36 of the extruder 20, thereby allowing for varying durations of mixing of the active and encapsulating ingredients. The active and encapsulating ingredients may be added in pellet or raw ingredient form, such as but not limited to powder or flake materials.

In the inventive method, the encapsulating ingredient is mixed with the active ingredient before any melting of the encapsulating ingredient occurs. Melting of the encapsulating ingredient occurs when the encapsulating ingredient changes from a powdered form to flowable mass having a measurable viscosity. The encapsulating and active ingredients may be mixed within a portion of the extruder 20, such as a first barrel located upstream of a portion of the extruder 20 where the melting occurs for example, or alternatively, may be mixed together before being provided to the extruder 20. In addition, both the encapsulating ingredient and the active ingredient may be supplied having a similar raw ingredient form, such as particles. Further, the particles of encapsulating ingredient and the particles of active ingredient used to form the first component may be closer in size than in conventional comestibles. For example, a ratio of the average longest dimension of the particles of encapsulating ingredient to the average longest dimension of the particles of active ingredient is less than or equal to about 20:1. To achieve this reduced sizing ratio, the size of the particles of encapsulating ingredient provided to the extruder 20 may be decreased. The particles of encapsulating ingredient have an average longest dimension of less than 1000 µm, such as less than 700 µm for example. The particles of active ingredient similarly have an average longest dimension of less than 1000 µm. This reduction in size of the particles of encapsulating ingredient may occur by milling, grinding, or another suitable form of breaking the particles of encapsulating ingredient prior to providing the encapsulating ingredient to the extruder 20.

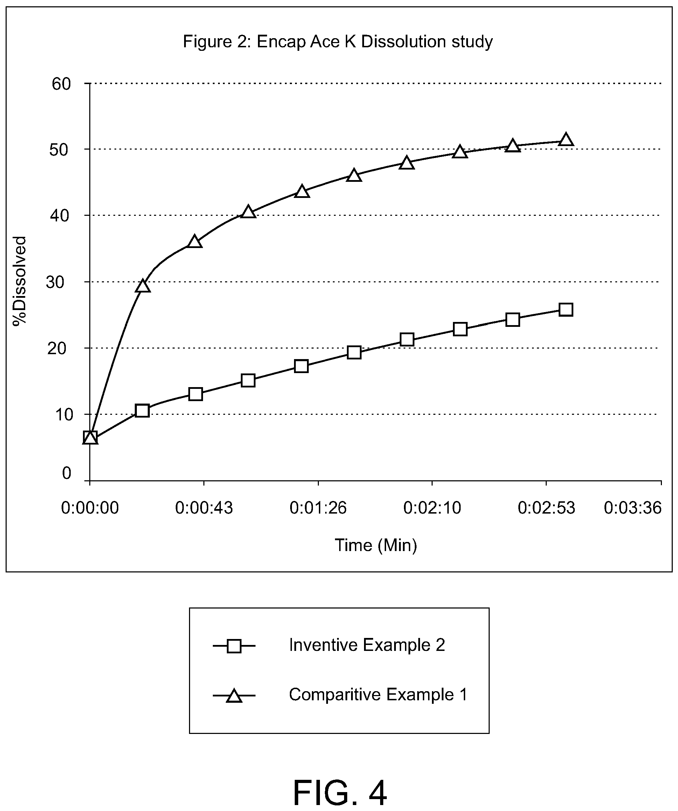

Reducing the size of the particles of encapsulating ingredient and mixing of the encapsulating and active ingredients before initiating any melting of the encapsulating material occurs provides the unexpected result of improving the encapsulation efficacy of the encapsulating composition. For example, as shown in FIG. 4, an encapsulating composition as described herein with a first active ingredient, such as Ace-K for example, has a release profile such that less than or equal to about 30% of said active ingredient dissolves after 3 minutes. However, an encapsulated first active ingredient having the same composition but being formed via conventional methods of mixing the active ingredient into the melted encapsulating ingredient, has a release profile of greater than 50% after the same length of time. Consequently, when an encapsulating composition formed by mixing the encapsulating and active ingredients before melting the encapsulating material is exposed to a dissolving agent, the amount of dissolution that occurs within a first minute is less than half of the amount of active dissolved from an identical encapsulating composition formed via a conventional method. The initial mixing of the encapsulating and active ingredients results in better dispersion of the active ingredient within the encapsulating ingredient prior to the softening of the encapsulating ingredient.

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

## Claims

1. A method for preparing at least a first component of a comestible composition, comprising:
providing particles of an encapsulating ingredient having an average longest dimension of less than 1000 µm to a mixer;
providing particles of an active ingredient having an average longest dimension of less than 1000 µm to said mixer; and
forming a composition of said encapsulating ingredient and said active ingredient, wherein forming said composition comprises:
mixing said particles of encapsulating ingredient and said particles of active ingredient; and
melting said particles of encapsulating ingredient;
wherein said mixing of said particles of encapsulating ingredient and said active ingredient occurs prior to said melting of said particles of encapsulating ingredient,
wherein the active ingredient comprises a sweetener and/or a food acid, and
wherein the encapsulating ingredient comprises a polymer or resin.

2. The method according to claim 1, wherein said particles of said encapsulating ingredient have an average longest dimension of less than 700 µm.

3. The method according to claim 1, wherein said particles of said active ingredient have an average longest dimension of less than 700 µm.

4. The method according to claim 1, wherein a ratio of said average longest dimension of said particles of encapsulating ingredient to said average longest dimension of said particles of active ingredient is less than about 20:1.

5. The method according to claim 1, wherein said mixing of said particles of encapsulating ingredient and said active ingredient occurs prior to and during said melting of said particles of encapsulating ingredient.

6. The method according to claim 1, wherein said particles of said encapsulating ingredient are milled before being provided to said mixer.

7. The method according to claim 1, wherein said comestible composition is a chewing gum.

8. The method according to claim 1, wherein said mixer is an extruder.

9. The method according to claim 1, wherein said mixer is a batch mixer.

10. The method according to any preceding claim, wherein the active ingredient comprises a sweetener selected from water-soluble sweeteners, water-soluble artificial sweeteners, water-soluble sweeteners derived from naturally occurring water-soluble sweeteners, dipeptide-based sweeteners, and protein-based sweeteners, including mixtures thereof.

11. The method according to claim 10, wherein the active ingredient comprises a sweetener selected from:
(a) water-soluble sweetening agents which are dihydrochalcones, monellin, steviosides, glycyrrhizin, saccharin salts, cyclamate salts, acesulfame salts, sodium, ammonium or calcium salt of 3,4-dihydro-6-methyl-1,2,3-oxathiazine-4-one-2,2-dioxide, potassium salt of 3,4-dihydro-6-methyl-1,2,3-oxathiazine-4-one-2,2-dioxide, the free acid form of saccharin and monatin;
(b) dipeptide-based sweeteners which are L-aspartyl-L-phenylalanine methyl ester and L-alphaaspartyl-N-(2,2,4,4-tetramethyl-3-thietanyl)-D-alaninamide hydrate, methyl esters of L-aspartyl-L-phenylglycerine, L-aspartyl-L-2,5- dihydrophenylglycine, L-aspartyl-2,5-dihydro-L-phenylalanine; L-aspartyl-L-(l- cyclohexen)-alanine, neotame and advantame;
(c) water-soluble sweeteners derived from naturally occurring water-soluble sweeteners which are Reb-A, chlorinated derivatives of ordinary sugar, chlorodeoxysugar derivatives, derivatives of chlorodeoxysucrose or chlorodeoxygalactosucrose, Sucralose; l-chloro-l'-deoxysucrose, 4-chloro-4-deoxyalpha-D-galactopyranosyl-alpha-D-fructofuranoside, 4-chloro-4-deoxygalactosucrose, 4-chloro-4-deoxy-alpha-D-galactopyranosyl-1-chloro-l-deoxy-beta-D-fructofuranoside, 4,1'-dichloro-4,l'-dideoxygalactosucrose, l',6'-dichloro-l',6'-dideoxysucrose, 4-chloro-4-deoxy-alpha-D-galactopyranosyl-l,6-dichloro-l,6-dideoxy-beta-D-fructofuranoside, 4,1',6'-trichloro-4,1',6'-trideoxygalactosucrose, 4,6-dichloro-4,6-dideoxy-alpha-D-galactopyranosyl-6-chloro-6-deoxy-beta-D-fructofuranoside, 4,6,6'-trichloro-4,6,6'-trideoxygalactosucrose, 6,1',6'-trichloro-6,1',6'-trideoxysucrose, 4,6-dichloro-4,6-dideoxy-alpha-D-galacto-pyranosyl-l,6-dichloro-l,6-dideoxy-beta-D-fructofuranoside, 4,6,l',6'-tetrachloro-4,6,1',6'-tetradeoxygalacto-sucrose, and 4,6,l',6'-tetradeoxy-sucrose, and mixtures thereof; or
(d) other protein based sweeteners which are thaumaoccous danielli: Thaumatin I and II, and talin.

12. The method according to any preceding claim, wherein the active ingredient comprises a food acid selected from citric acid, malic acid, fumaric acid, tartaric acid, lactic acid and adipic acid.

13. The method according to any preceding claim, wherein the encapsulating ingredient is selected from polyvinyl acetate, polyethylene, crosslinked polyvinyl pyrrolidone, polymethylmethacrylate, polylactidacid, polyhydroxyalkanoates, ethylcellulose, polyvinyl acetatephthalate, polyethylene glycol esters, methacrylicacid-co-methylmethacrylate, and polyvinylacetate-vinyl alcohol copolymer.

## Patentansprüche

1. Verfahren zum Herstellen mindestens einer ersten Komponente einer essbaren Zusammensetzung, umfassend:
Bereitstellen von Partikeln eines Einkapselungsbestandteils, das eine durchschnittliche längste Abmessung von weniger als 1000 µm aufweist, für einen Mischer;
Bereitstellen von Wirkstoffpartikeln, die eine durchschnittliche längste Abmessung von weniger als 1000 µm aufweisen, für den Mischer; und
Ausbilden einer Zusammensetzung aus dem Einkapselungsbestandteil und dem Wirkstoff, wobei das Ausbilden der Zusammensetzung umfasst:
Mischen der Partikel des Einkapselungsbestandteils und der Partikel des Wirkstoffs; und
Schmelzen der Partikel des Einkapselungsbestandteils;
wobei das Mischen der Partikel des Einkapselungsbestandteils und des Wirkstoffs vor dem Schmelzen der Partikel des Einkapselungsbestandteils erfolgt,
wobei der Wirkstoff einen Süßstoff und/oder eine Lebensmittelsäure umfasst, und
wobei der Einkapselungsbestandteil ein Polymer oder Harz umfasst.

2. Verfahren nach Anspruch 1, wobei die Partikel des Einkapselungsbestandteils eine durchschnittliche längste Abmessung von weniger als 700 µm aufweisen.

3. Verfahren nach Anspruch 1, wobei die Partikel des Wirkstoffs eine durchschnittliche längste Abmessung von weniger als 700 µm aufweisen.

4. Verfahren nach Anspruch 1, wobei ein Verhältnis der durchschnittlichen längsten Abmessung der Partikel des Einkapselungsbestandteils zu der durchschnittlichen längsten Abmessung der Partikel des Wirkstoffs weniger als etwa 20 : 1 beträgt.

5. Verfahren nach Anspruch 1, wobei das Mischen der Partikel des Einkapselungsbestandteils und des Wirkstoffs vor und während des Schmelzens der Partikel des Einkapselungsbestandteils erfolgt.

6. Verfahren nach Anspruch 1, wobei die Partikel des Einkapselungsbestandteils gemahlen werden, bevor sie für den Mischer bereitgestellt werden.

7. Verfahren nach Anspruch 1, wobei die essbare Zusammensetzung ein Kaugummi ist.

8. Verfahren nach Anspruch 1, wobei der Mischer ein Extruder ist.

9. Verfahren nach Anspruch 1, wobei der Mischer ein Batchmischer ist.

10. Verfahren nach einem der vorstehenden Ansprüche, wobei der Wirkstoff einen Süßstoff umfasst, der aus wasserlöslichen Süßstoffen, wasserlöslichen künstlichen Süßstoffen, wasserlöslichen Süßstoffen, die aus natürlich vorkommenden wasserlöslichen Süßstoffen gewonnen werden, Süßstoffen auf Dipeptidbasis und Süßstoffen auf Proteinbasis, einschließlich Mischungen davon, ausgewählt ist.

11. Verfahren nach Anspruch 10, wobei der Wirkstoff einen Süßstoff umfasst, der ausgewählt ist aus:
(a) wasserlöslichen Süßstoffen, die Dihydrochalkone, Monellin, Stevioside, Glycyrrhizin, Saccharinsalze, Cyclamatsalze, Acesulfamsalze, Natrium-, Ammonium- oder Calciumsalz von 3,4-Dihydro-6-methyl-1,2,3-oxathiazin-4-on-2,2-dioxid, Kaliumsalz von 3,4-Dihydro-6-methyl-1,2,3-oxathiazin-4-on-2,2-dioxid, die freie Säureform von Saccharin und Monatin sind;
(b) Süßstoffen auf Dipeptidbasis, die L-Aspartyl-L-phenylalaninmethylester und L-Alpha-Aspartyl-N-(2,2,4,4-tetramethyl-3-thietanyl)-D-alaninamidhydrat, Methylestern von L-Aspartyl-L-phenylglycerin, L-Aspartyl-L-2,5-dihydrophenylglycin, L-Aspartyl-2,5-dihydro-L-phenylalanin; L-Aspartyl-L-(1-cyclohexen)-alanin, Neotam und Advantam sind;
(c) wasserlöslichen Süßstoffen, die aus natürlich vorkommenden wasserlöslichen Süßstoffen gewonnen werden, die Reb-A, chlorierte Derivate von gewöhnlichem Zucker, Chlorodeoxyzucker-Derivate, Derivate von Chlorodeoxysaccharose oder Chlorodeoxygalactosaccharose, Sucralose; 1-Chlor-1'-desoxysaccharose, 4-Chlor-4-desoxy-alpha-D-galactopyranosyl-alpha-D-fructofuranosid, 4-Chlor-4-desoxygalactosaccharose, 4-Chlor-4-desoxy-alpha-D-galactopyranosyl-1-chlor-1-desoxy-beta-D-fructo-furanosid, 4,1'-Dichlor-4,1'-dideoxygalactosaccharose, 1',6'-Dichlor-1',6'-dideoxysaccharose, 4-Chlor-4-desoxy-alpha-D-galactopyranosyl-1,6-dichlor-1,6-dideoxy-beta-D-fructofuranosid, 4,1',6'-Trichlor-4,1',6'-trideoxygalactosaccharose 4,6-Dichlor-4,6-dideoxy-alpha-D-galactopyranosyl-6-chlor-6-desoxy-beta-D-fructofuranosid, 4,6,6'-Trichlor-4,6,6'-trideoxygalactosucrose, 6,1',6'-Trichlor-6,1',6'-trideoxysucrose, 4,6-Dichlor-4,6-dideoxy-alpha-D-galactopyranosyl-1,6-dichlor-1,6-dideoxy-beta-D-fructofuranosid, 4,6,1',6'-Tetrachlor-4,6,1',6'-tetradeoxygalacto-saccharose und 4,6,1',6'-Tetradeoxy-saccharose und Mischungen davon sind; oder
(d) anderen Süßstoffen auf Proteinbasis, die Thaumatococcus Danielli: Thaumatin I und II und Talin sind.

12. Verfahren nach einem der vorstehenden Ansprüche, wobei der Wirkstoff eine Lebensmittelsäure umfasst, die aus Zitronensäure, Äpfelsäure, Fumarsäure, Weinsäure, Milchsäure und Adipinsäure ausgewählt ist.

13. Verfahren nach einem der vorstehenden Ansprüche, wobei der Einkapselungsbestandteil aus Polyvinylacetat, Polyethylen, vernetztem Polyvinylpyrrolidon, Polymethylmethacrylat, Polymilchsäure, Polyhydroxyalkanoaten, Ethylcellulose, Polyvinylacetatphthalat, Polyethylenglykolestern, Methacrylsäure-co-Methylmethacrylat und Polyvinylacetat-Vinylalkohol-Copolymer ausgewählt ist.

## Revendications

1. Procédé permettant de préparer au moins un premier composant d'une composition comestible, comprenant :
la fourniture de particules d'un ingrédient d'encapsulation ayant une dimension la plus longue moyenne inférieure à 1 000 µm à un mélangeur ;
la fourniture de particules d'un ingrédient actif ayant une dimension la plus longue moyenne inférieure à 1 000 µm audit mélangeur ; et
la formation d'une composition dudit ingrédient d'encapsulation et dudit ingrédient actif, dans lequel la formation de ladite composition comprend :
le mélange desdites particules d'ingrédient d'encapsulation et desdites particules d'ingrédient actif ; et
la fusion desdites particules d'ingrédient d'encapsulation ;
dans lequel ledit mélange desdites particules d'ingrédient d'encapsulation et dudit ingrédient actif se produit avant ladite fusion desdites particules d'ingrédient d'encapsulation,
dans lequel l'ingrédient actif comprend un édulcorant et/ou un acide alimentaire, et
dans lequel l'ingrédient d'encapsulation comprend un polymère ou une résine.

2. Procédé selon la revendication 1, dans lequel lesdites particules dudit ingrédient d'encapsulation ont une dimension la plus longue moyenne inférieure à 700 µm.

3. Procédé selon la revendication 1, dans lequel lesdites particules dudit ingrédient actif ont une dimension la plus longue moyenne inférieure à 700 µm.

4. Procédé selon la revendication 1, dans lequel un rapport de ladite dimension la plus longue moyenne desdites particules d'ingrédient d'encapsulation à ladite dimension la plus longue moyenne desdites particules d'ingrédient actif est inférieur à environ 20:1.

5. Procédé selon la revendication 1, dans lequel ledit mélange desdites particules d'ingrédient d'encapsulation et dudit ingrédient actif se produit avant et pendant ladite fusion desdites particules d'ingrédient d'encapsulation.

6. Procédé selon la revendication 1, dans lequel lesdites particules dudit ingrédient d'encapsulation sont broyées avant d'être fournies audit mélangeur.

7. Procédé selon la revendication 1, dans lequel ladite composition comestible est un chewing-gum.

8. Procédé selon la revendication 1, dans lequel ledit mélangeur est une extrudeuse.

9. Procédé selon la revendication 1, dans lequel ledit mélangeur est un mélangeur à charges successives.

10. Procédé selon l'une quelconque revendication précédente, dans lequel l'ingrédient actif comprend un édulcorant choisi parmi édulcorants hydrosolubles, édulcorants artificiels hydrosolubles, édulcorants hydrosolubles dérivés d'édulcorants hydrosolubles présents naturellement, édulcorants à base de dipeptides et édulcorants à base de protéines, y compris des mélanges de ceux-ci.

11. Procédé selon la revendication 10, dans lequel l'ingrédient actif comprend un édulcorant choisi parmi :
(a) des agents édulcorants hydrosolubles qui sont dihydrochalcones, monelline, stéviosides, glycyrrhizine, sels de saccharine, sels de cyclamate, sels d'acésulfame, sel de sodium, d'ammonium ou de calcium de 3,4-dihydro-6-méthyl-1,2,3-oxathiazine-4-one-2,2-dioxyde, sel de potassium de 3,4-dihydro-6-méthyl-1,2,3-oxathiazine-4-one-2,2-dioxyde, la forme acide libre de saccharine et de monatine ;
(b) des édulcorants à base de dipeptides qui sont ester méthylique de L-aspartyl-L-phénylalanine et hydrate de L-alpha-aspartyl-N-(2,2,4,4-tétraméthyl-3-thiétanyl)-D-alaninamide, esters méthyliques de L-aspartyl-L-phénylglycérine, L-aspartyl-L-2,5-dihydrophényl-glycine, L-aspartyl-2,5-dihydro-L-phénylalanine ; L-aspartyl-L-(1-cyclohexèn)-alanine, néotame et advantame ;
(c) des édulcorants hydrosolubles dérivés d'édulcorants hydrosolubles présents naturellement qui sont Reb-A, dérivés chlorés de sucre ordinaire, dérivés de chlorodésoxy-saccharose, dérivés de chlorodésoxy-galactosaccharose, sucralose ; 1-chloro-1'-désoxy-saccharose, 4-chloro-4-désoxy-alpha-D-galactopyranosyl-alpha-D-fructofuranoside, 4-chloro-4-désoxygalactosaccharose, 4-chloro-4-désoxy-alpha-D-galactopyranosyl-1-chloro-1-désoxy-bêta-D-fructofuranoside, 4,1'-dichloro-4,1'-didésoxygalactosaccharose, 1',6'-dichloro-1',6'-didésoxysaccharose, 4-chloro-4-désoxy-alpha-D-galactopyranosyl-1,6-dichloro-1,6-didésoxy-bêta-D-fructofuranoside, 4,1',6'-trichloro-4,1',6'-tridésoxygalactosaccharose, 4,6-dichloro-4,6-didésoxy-alpha-D-galactopyranosyl-6-chloro-6-désoxy-bêta-D-fructofuranoside, 4,6,6'-trichloro-4,6,6'-tridésoxygalactosaccharose, 6,1',6'-trichloro-6,1',6'-tridésoxysaccharose, 4,6-dichloro-4,6-didésoxy-alpha-D-galacto-pyranosyl-1,6-dichloro-1,6-didésoxy-bêta-D-fructofuranoside, 4,6,1',6'-tétrachloro-4,6,1',6'-tétradésoxygalacto-saccharose et 4,6,1',6'-tétradésoxy-saccharose, et des mélanges de ceux-ci ; ou
(d) d'autres édulcorants à base de protéines qui sont thaumaoccous danielli : thaumatine I et II, et taline.

12. Procédé selon l'une quelconque revendication précédente, dans lequel l'ingrédient actif comprend un acide alimentaire choisi parmi acide citrique, acide malique, acide fumarique, acide tartrique, acide lactique et acide adipique.

13. Procédé selon l'une quelconque revendication précédente, dans lequel l'ingrédient d'encapsulation est choisi parmi acétate de polyvinyle, polyéthylène, polyvinylpyrrolidone réticulée, polyméthylméthacrylate, polyacide lactique, polyhydroxyalcanoates, éthylcellulose, acétatephtalate de polyvinyle, esters de polyéthylène glycol, acide méthacrylique-co-méthacrylate de méthyle, et copolymère acétate de polyvinyle-alcool vinylique.
